# EUROPEAN PATENT APPLICATION

(11) **EP 1 591 234 A1**
(43) Date of publication of application: **02.11.2005**
(21) Application number: 05009049.7
(22) Date of filing: 25.04.2005
(51) Int. Cl.: B32B 17/10, B32B 25/14, B60J 1/02, B60R 21/34

(54) **Laminated glass and interlayer for use in such a laminated glass**

(30) Priority: 26.04.2004 JP 2004129726
(71) Applicant: ASAHI GLASS COMPANY LTD., Tokyo 100-8405 (JP); HONDA MOTOR CO., Ltd., Tokyo 107-8556 (JP)
(72) Inventor: Okamoto, Yutaka, Wako-shi Saitama-ken 351-0193 (JP); Kikuchi, Yuji, Wako-shi Saitama-ken 351-0193 (JP); Kuribayashi, Akihiko, Wako-shi Saitama-ken 351-0193 (JP); Nishihama, Jirou, Chita-gun Aichi (JP); Nagai, Kuniko, Chita-gun Aichi (JP); Masaki, Yuuji, Chita-gun Aichi (JP)
(74) Representative: Müller-Boré & Partner Patentanwälte

(57) **Abstract**

A laminated glass for a vehicle window, comprises a plurality of glass sheets and an interlayer interposed between adjacent glass sheets to bond the adjacent glass sheets, wherein the interlayer satisfies the following conditions:
1) when a specimen of dumbbell No. 7 prescribed in JIS K6251 is employed to conduct a high speed tensile test at 23°C and at 1 m/sec, a load for an extension of 15 mm is 10 N or below; or when a specimen of dumbbell No. 7 prescribed in JIS K6251 is employed to conduct a high speed tensile test at 23°C and at 1 m/sec, an extension amount, which is obtained when work required for extension is 0.3 J, is 30 mm or above; and
2) when the interlayer is sandwiched between two glass sheets having a thickness of 2 mm to form a laminated glass having dimensions of 100 mm × 300 mm, and when the laminated glass is left for 300 hrs under an atmosphere of 80°C, having a side of 300 mm positioned as a base and being kept at an angle of 45 deg from a vertical direction, the glass sheets have a slide of 1 mm or below.

## Description

The present invention relates to a laminated glass for use in a vehicle window, in particular a laminated glass having a high shock-absorbing property and an interlayer for use in such a laminated glass.

Heretofore, external air bags for pedestrian protection have been proposed for the purpose of protecting a pedestrian (see, e.g., JP-9-30368). However, external air bags have had problems that equipment is expensive since an extremely extensive system is needed, and that there is a significant limitation to design.

It is an object of the present invention to solve the problems stated earlier and to provide a solution to increase a shock-absorbing property without relying on an external air bag.

In order to attain the object, the present invention provides a laminated glass for a vehicle window, comprising a plurality of glass sheets and an interlayer interposed between adjacent glass sheets to bond the adjacent glass sheets, wherein the interlayer satisfies the following conditions:
1) when a specimen of dumbbell No. 7 prescribed in JIS K6251 is employed to conduct a high speed tensile test at 23°C and at 1 m/sec, a load for an extension of 15 mm is 10 N or below; and
2) when the interlayer is sandwiched between two glass sheets having a thickness of 2 mm to form a laminated glass having dimensions of 100 mm × 300 mm, and when the laminated glass is left for 300 hrs under an atmosphere of 80°C, having a side of 300 mm positioned as a base and being kept at an angle of 45 deg from a vertical direction, the glass sheets have a slide of 1 mm or below.

The present invention also provides a laminated glass for a vehicle window, comprising a plurality of glass sheets and an interlayer interposed between adjacent glass sheets to bond the adjacent glass sheets, wherein the interlayer satisfies the following conditions:
1) when a specimen of dumbbell No. 7 prescribed in JIS K6251 is employed to conduct a high speed tensile test at 23°C and at 1 m/sec, an extension amount, which is obtained when work required for extension is 0.3 J, is 30 mm or above; and
2) when the interlayer is sandwiched between two glass sheets having a thickness of 2 mm to form a laminated glass having dimensions of 100 mm × 300 mm, and when the laminated glass is left for 300 hrs under an atmosphere of 80°C, having a side of 300 mm positioned as a base and being kept at an angle of 45 deg from a vertical direction, the glass sheets have a slide of 1 mm or below.

The present invention also provides an interlayer for a laminated glass for use in a vehicle window, the interlayer satisfying the following conditions:
1) when a specimen of dumbbell No. 7 prescribed in JIS K6251 is employed to conduct a high speed tensile test at 20°C and at 1 m/sec, a load for an extension of 15 mm is 15 N or below; and
2) when the interlayer is sandwiched between two glass sheets having a thickness of 2 mm to form a laminated glass having dimensions of 100 mm × 300 mm, and when the laminated glass is left for 300 hrs under an atmosphere of 80°C, having a side of 300 mm positioned as a base and being kept at an angle of 45 deg from a vertical direction, the glass sheets have a slide of 1 mm or below.

The present invention also provides an interlayer for a laminated glass for use in a vehicle window, the interlayer satisfying the following conditions:
1) when a specimen of dumbbell No. 7 prescribed in JIS K6251 is employed to conduct a high speed tensile test at 23°C and at 1 m/sec, an extension amount, which is obtained when work required for extension is 0.3 J, is 30 mm or above; and
2) when the interlayer is sandwiched between two glass sheets having a thickness of 2 mm to form a laminated glass having dimensions of 100 mm × 300 mm, and when the laminated glass is left for 300 hrs under an atmosphere of 80°C, having a side of 300 mm positioned as a base and being kept at an angle of 45 deg from a vertical direction, the glass sheets have a slide of 1 mm or below.

It is preferred that the interlayer comprise at least one material selected in the group consisting of plasticized polyvinyl acetal, a urethane elastomer, a hydrogenated styrene butadiene elastomer, an ethylene acetic vinyl copolymer, a soft plasticized polyvinyl chloride elastomer and an olefin elastomer.

It is preferred that the interlayer has a multilayered structure.

It is preferred that the laminated glass be employed in at least one selected from the group consisting of a front windshield, a side windshield and a rear windshield.

In accordance with the present invention, it is possible to obtain, without causing problems, such as a plate slide, a laminated glass for use in a vehicle window, which has a high shock-absorbing property, and an interlayer for use in such a laminated glass.

In the drawings:
Fig. 1 is a graph showing displacement of a steel ball in a ball test in Example 1 and Example 2;
Fig. 2 is a graph showing displacement of a steel ball in a ball test wherein the ball test was conducted at normal temperature (23°C), 40°C and 50°C with respect to a conventional interlayer made of polyvinyl butyral; and
Fig. 3 is a schematic view showing how to conduct a plate slide test.

One of the features of the present invention is to adjust a physical property of a laminated glass, which is used in, e.g., an automobile windshield, as a replacement for an external air bag. Specifically, the physical property of an interlayer is set in a specific range to improve a shock-absorbing property of the laminated glass.

Although various kinds of indexes are available for evaluation of such a shock-absorbing property, the inventors have found that the maximum sinking amount of a steel ball in a ball test is utilized as simple measurement.

The ball test is conducted in a similar way to a penetration resistance test prescribed in JIS R3212. With respect to a frame used in the test, a frame, which is supported by four legs having a length of 300 mm or longer, is used because of, e.g., a possibility of a deformed glass hitting against a bottom surface and a difficulty in measuring a deformation amount if a frame as prescribed in JIS is used. Other items, such as a used steel ball, a drop height (4 mm, otherwise specified), are the same as ones prescribed in JIS R3212. JIS R3212 prescribes how to conduct a drop test. There is JIS R3211 available as a criterion for penetration resistance, which should be satisfied in the ball test.

When a steel ball is dropped onto a central portion of a laminated glass supported by a frame, the laminated glass is normally broken. Additionally, the laminated glass absorbs the kinematic energy of the steel ball as in a spring by a rebounding force caused by deformation behavior of the glass and the interlayer to halt the steel ball, or additionally, the laminated glass rebounds the steel ball.

Although the analysis of this behavior is complicated, the behavior may be roughly understood as follows. Specifically, it is considered that the greater displacement a colliding object has until the object halts, the higher impact absorbing performance the laminated glass has since the instant impact, i.e., the maximum acceleration is reduced from the standpoint of the object. When this consideration is applied to the phenomenon in question, it is concluded that the greater the maximum sinking amount of a steel ball is when the steel ball makes a collision, the higher the impact absorbing performance of the laminated glass is. The maximum sinking amount may be quantified by continuous measurement, which is conducted by, e.g., a noncontact displacement gage or photography using a high-speed video camera. The inventors measured the maximum sinking amount in a ball test under various circumstances with respect to laminated glasses using a conventional interlayer, and have found that laminated glasses can have a relatively greater sinking amount, (i.e., a higher impact absorbing performance) at a high temperature.

From this viewpoint of the measurement results, this phenomenon is supposed to reflect that interlayers are softened by being heated to a high temperature. On the other hand, it can be also understood that although an interlayer is sandwiched by a hard glass sheet, the mechanical property of the interlayer affects the shock-absorbing property of the glass sheet at the time of collision against the glass sheet. In this case, the penetration resistance performance of a laminated glass is degraded since the interlayer is likely to be broken by being heated to a high temperature. However, as long as an interlayer is heated to a temperature of about 50°C or below, the interlayer can have an increased thickness to obtain penetration resistance performance to such degree that no trouble is caused in practice. Thus, it is possible to obtain a laminated glass, which has the maximum sinking amount significantly increased in comparison with conventional interlayers and has a penetration resistance property.

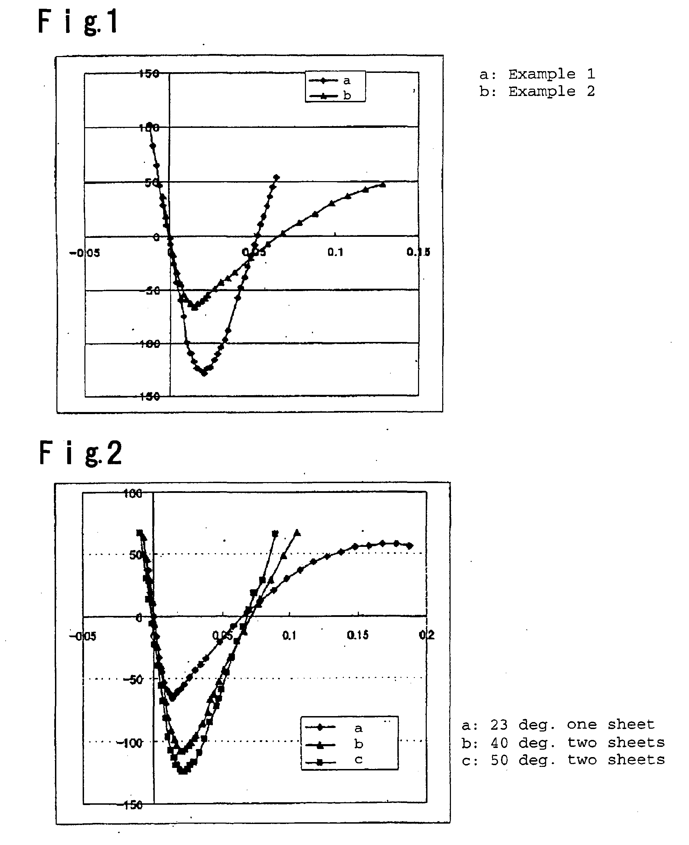

Fig. 2 is a graph showing displacement of a steel ball at normal temperature (23°C), 40°C and 50°C in a ball test with respect to a conventional interlayer made of polyvinyl butyral, wherein the displacement of the lowest point of each of curves corresponds to the maximum sinking amount. The horizontal axis represents time (second), and the vertical axis represents displacement (mm). It reveals that by heating the interlayer to 40°C and 50°C, the maximum sinking amount in the ball test is beyond 100 mm, i.e., that the shock-absorbing property of a laminated glass is drastically increased. In particular, by heating the interlayer to 50°C, the maximum sinking amount is beyond 120 mm.

In order to heat a laminated glass constantly to 40°C or 50°C for use in an automobile window, it is necessary to provide a large apparatus, which is not practical. From this viewpoint, it is preferred that an interlayer, which has a similar softness to a laminated glass heated to a temperature of 40°C or 50°C, be produced at normal temperature. Now, the issue is by what index the 'softness' corresponding to the shock-absorbing performance can be represented.

Even conventionally used interlayers made of polyvinyl butyral are softened when the amount of a plasticizer to add is increased. Some of such interlayers have a tendency that an SS curve (curve specified by a load represented by a vertical axis as well as by an extension amount represented by a horizontal axis) obtained by a tensile test prescribed in JIS K6251 is close to that of a conventional interlayer heated to a temperature of about 40°C. In other words, if a soft film always has high shock-absorbing performance, a laminated glass, which employs a film of polyvinyl butyral with the addition amount of a plasticizer increased, should have a similar maximum sinking amount in a ball test, which is similar to a normally employed laminated glass heated to a temperature of about 40°C.

However, in the case of a laminated glass, which employs as an interlayer a film of polyvinyl butyral with the addition amount of a plasticizer increased, the maximum sinking amount in a ball test is not so large as a laminated glass, which has been heated to a temperature of about 40°C. This suggests that a factor other than the softness represented by an SS curve obtained by a tensile test prescribed in JIS K6251, contributes to determine the magnitude of the shock-absorbing performance.

Under the circumstances, the inventors have found that the characteristic of an SS curve, which is obtained when a high-speed tensile test is conducted with respect to an interlayer, is interrelated with the maximum sinking amount in a ball test. Specifically, two kinds of representations are available. One of the representations is that, when a load for an extension of 15 mm is 10 N or below in a case wherein a specimen of dumbbell No. 7 prescribed in JIS K6251 is used to conduct a high speed tensile test at 23°C and at 1 m/sec, it is possible to obtain drastically improved shock-absorbing performance similar to one heated to a temperature of about 40°C. It is preferred that a load for an extension of 15 mm be 8 N or below in a case wherein a specimen of dumbbell No. 7 prescribed in JIS K6251 is used to conduct a high speed tensile test at 23°C and at 1 m/sec. The other is that, when an extension, which is caused by a work of 0.3 J, is 30 mm or above in a case wherein a specimen of dumbbell No. 7 prescribed in JIS K6251 is used to conduct a high speed tensile test at 23°C and 1 m/sec, it is also possible to obtain drastically improved shock-absorbing performance similar to one heated to a temperature of about 40°C. It is preferred that an extension, which is caused by a work of 0.3 J, be 35 mm or above in a case wherein a specimen of dumbbell No. 7 prescribed in JIS K6251 is used to conduct a high speed tensile test at 23°C at 1 m/sec. It is also preferred that an extension amount, which is obtained when work required for extension is 0.3 J, be 30 mm or above in a case wherein a specimen of dumbbell No. 7 prescribed in JIS K6251 is employed to conduct a high speed tensile test at 23°C and at 1 m/sec.

The high-speed tensile test may be conducted as follows. Specimens are formed so as to have a shape of dumbbell No. 7 prescribed in JIS K6251 and have a thickness set at the same size as an actually used one. A tensile rate was set at 1 m/sec so that a strain rate was equal to a deformation rate of an interlayer, which was obtained by observing a deformation state of the laminated glass in a ball test (this tensile rate is 120 times the tensile test rate, which is 500 mm/min when measuring the above-mentioned SS curve).

A high-speed tensile testing machine may be a falling weight type, a spring type or a type of combination thereof. In the test described in Description, a hydraulic testing machine was used. One end of a dumbbell specimen is mounted to a load sensor, and the other end is mounted to a hydraulic actuator. Since such a high-speed tensile testing machine requires an entrance length to reach a set rate, the specimen is mounted to the actuator by using a jig, which is designed so that a load is applied to the dumbbell specimen after completion of the entrance length. After the rate has reached the set value by activating the actuator in such arrangement, specimens are tensioned to measure the relationship of a deformation amount and a load.

In order to make evaluation including an effect offered by a thickness, a load, instead of a stress obtained by dividing a load by a cross-sectional area, is utilized to find the relationship between a load and displacement with respect to deformation characteristics. The displacement represents a travel distance of a supporter of an interlayer. It is basically supposed that a smaller load to displacement has a higher shock-absorbing property. In most of cases, the relationship between a measured load and a measured displacement is not a simple linear relationship. In this case, what is theoretically important is an extension amount, which is obtained when reaching a certain shock energy absorption amount. A shock energy absorption amount is found by integrating a load with a displacement as a work required for deformation in this measurement. It was revealed that the relationship between a load and a displacement, and the relationship between a work and a displacement, which were measured in this method, corresponded to the results of the ball test stated earlier with respect to various films.

An interlayer, which has tensile test characteristics stated earlier, might be also obtained by simply increasing the amount of a plasticizer to be added to a conventional polyvinyl butyral film. However, in a case wherein a plasticizer was simply added to a conventional interlayer, it was revealed that in some cases, a practical trouble was caused when the conventional interlayer was formed so as to have, at normal temperature, similar characteristics to one heated to 40°C in terms of SS curve obtained by a tensile test prescribed in JIS K6251. In some cases, this trouble becomes tangible as a problem of a plate slide, which is caused when a laminated glass is leaned and is left as it is for a long time, for instance.

The test to check out the presence and absence of a plate slide as a characteristic of an interlayer may be conducted as follows:

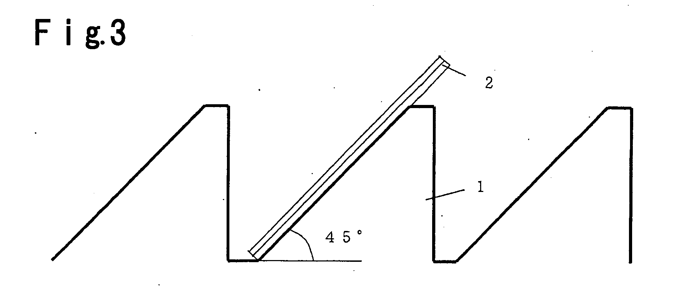

Each laminated glass used in the test for such a plate slide comprises two glass sheets having a thickness of 2 mm and an interlayer sandwiched therebetween, and has dimensions of 100×300 mm. In order to support each of laminated glass at an angle 45° from the horizontal, each laminated glass is leaned against a jig so as to have a side of 300 mm positioned as the base, the jig comprising two plates having grooves preliminarily cut at an angle of 45°. This state is shown in Fig. 3. In this figure, reference numeral 1 designates a jig, and reference numeral 2 designates a laminated glass. In the case of a laminated glass, which is formed so as to include an interlayer having a slide of 1 mm between the glass sheets when conducting the plate slide test in such an arrangement, there is a possibility that e.g., trouble is caused wherein a molding bonded around the glass peels away. From this viewpoint, the present invention employs an interlayer, which has a plate slide value of 1 mm or below after the plate slide test. In this case, the condition where a laminated glass is left as it is is that the laminated glass is left as it is for 300 hours in an atmosphere at 80°C, which is a typical example as an acceleration test.

Since the plate slide varies depending on the thickness of an interlayer, the presence and absence of a plate slide as a characteristic of an interlayer is determined for each interlayer thickness.

Since the first approach to obtain a great extension at a low load (or low work) at a high speed tensile test, and the second approach to obtain a smaller plate slide at a plate slide test are generally contradictory characteristics each other, it is questionable whether it is possible to practically obtain a material or a structure (such as a thickness) suited to an interlayer, which satisfies both approaches.

However, although both characteristics correlate with each other, both characteristics do not always correspond to each other on one-to-one basis according to important finding by the inventors. It is possible to obtain a structure satisfying both characteristics by carefully selecting the material or the structure of an interlayer.

For example, the glass transformation point of normally employed interlayers made of polyvinyl butyral is at a slightly higher level in the vicinity of normal temperature. Accordingly, the fluidity of an interlayer greatly varies from temperature to temperature in the vicinity of normal temperature. It has been known that the behavior relating to the fluidity of an interlayer in high-speed tension is appropriate to the behavior relating to the fluidity of the interlayer at a low temperature. From this viewpoint, it is supposed that when an interlayer made of polyvinyl butyral is subjected to high-speed tension, the interlayer is made significantly harder in comparison with a behavior to static deformation since polyvinyl butyral undergoes fluent behavior similar to fluent behavior at a lower temperature than the glass transformation point. In other words, polyvinyl butyral exhibits a significant low fluidity at high-speed deformation caused at a tensile speed of about 1 m/sec in comparison with static deformation. From this viewpoint, it is estimated that when a plasticizer is simply added in order to increase the fluidity of an interlayer at the time of high-speed deformation, the fluidity at the time of static deformation is conversely increased too much, which causes a problem, such as a plate slide.

Accordingly, the guiding principle for material selection and structure design of an interlayer, which satisfy the conditions that the fluidity at the time of high speed deformation is high, and the fluidity at the time of static deformation is not too high, is as follows:
1) A material, which has a glass transformation point in a normal temperature range (from 0 to 30°C) or a glass transformation point in a higher temperature range than the normal temperature range (from 0 to 30°C), is selected. Thus, it becomes possible to obtain fluidity (so-called fluidity as solid body) in the vicinity of the glass transformation point or at a lower temperature than the glass transformation point in both of high-speed deformation and static deformation. Additionally, composition selection or composition control, such as addition of a plasticizer, is conducted so that a change in the fluidity at the glass transformation point is minimized, i.e., the fluidity at a lower temperature than the glass transformation point is increased. When an interlayer is made of a material having a glass transformation point in a higher temperature range than the normal temperature range, it is preferred that a temperature for fabricating a laminated glass or a temperature for extending the interlayer be set at a higher temperature than the temperature applied to conventional interlayers.
2) A material, which has a glass transformation point in a lower temperature range than the normal temperature range (from 0 to 30°C), is selected. Thus, it becomes to obtain fluidity at a higher temperature than the glass transformation point in both of high-speed deformation and static deformation. Additionally, composition selection or composition control, such as addition of a plasticizer, is conducted in order to suppress fluidity at a higher temperature than the glass transformation point. An example of the material that accords to this approach is a material exhibiting rubber elasticity at a higher temperature than the glass transformation point. Specific examples include a vinyl acetate copolymer and a styrene elastomer as a thermoplastic elastomer. In this case, it is preferred to select a material that exhibits rubber elasticity in at least one portion in the normal temperature range (from 0 to 30°C) .

Additionally, in order that a laminated glass, which is fabricated to include such a film, satisfy penetration resistance prescribed in JIS R3211 or JIS R3212, it is preferred to adjust the thickness or the bonding force of the interlayer. From this viewpoint, the interlayer may have a multilayered structure. For example, it is acceptable to alternate softer layers and hard layers or to dispose a layer having a high fluidity on a portion in contact with a glass sheet in order to adjust the bonding force to the glass sheet.

An example of the material for an interlayer that satisfies the characteristics according to the present invention is a thermoplastic polymer, such as plasticized polyvinyl acetal represented by plasticized polyvinyl butyral. Additionally, it is preferred to select at least one material selected from the group consisting of a urethane elastomer, a hydrogenated styrene butadiene elastomer, an ethylene-vinylacetate copolymer, a soft polyvinyl chloride elastomer and an olefin elastomer.

It is acceptable to mix an additive with an interlayer material. Examples of the additive include various kinds of pigment, a bonding force moderator, an antioxidant, an organic or inorganic ultraviolet absorber, and an organic or inorganic infrared absorber. The interlayer may contain a known plasticizer.

In general, the interlayer is produced by mixing a material and an additive, such as a plasticizer, and forming the mixture in a heated and molten state by extrusion.

It is preferred that an interlayer for a laminated glass according to the present invention pass a penetration resistance test prescribed in JIS R3212.

Although the present invention is adapted for a laminated glass mainly employed as a front windshield for a vehicle, the present invention is not limited to such an application and may be employed as a side windshield or a rear windshield.

Although the following method is proposed to produce a laminated glass according to the present invention, the present invention is not limited to the following method.

A sandwich structure, wherein an interlayer is sandwiched between two glass sheets, is prepared, and the sandwich structure is integrated by preliminary compression. The preliminarily compression may be conducted by containing the sandwich structure into an aluminum bag, evacuating the bag under a reduced pressure having an absolute pressure of, e.g., 10 kPa for a certain period of time, and heating the bag in such an evacuated state (for example, putting the bag, for a certain period of time, such as 30 minutes, in an oven having a temperature of about 120°C) or pressing the bag by a nipper roller. The sandwich structure, which has the glass sheets and the interlayer integrated by preliminary compression, may be put into an autoclave and be subjected to thermal compression treatment (e.g., a pressure of 1.3 MPa and a temperature of about 135°C) to fabricate a laminated glass.

### EXAMPLE

### PREPARATION OF INTERLAYER

Tuftec M1943 (manufactured by Asahi Kasei Corporation, referred to as Example 1) comprising a hydrogenated styrene butadiene elastomer was employed as an interlayer material. An antioxidant was added to the material. An interlayer was prepared, with a width of 1 m as a target value, from the material by extrusion molding. On the other hand, a conventional interlayer for an automobile windshield (manufactured by Sekisui Chemical Co., Ltd.) was prepared as a conventional example (Comparative Example) (referred to as Example 2). The resin employed in Example 1 had a region exhibiting rubber elasticity at a temperature of not less than the glass transformation point.

### PRODUCTION OF LAMINATED GLASS

Each of the interlayers was sandwiched between two float glass sheets having dimensions of 100x300 mm (and having a thickness of 2 mm). Each of the sandwich structures was evacuated under a reduced pressure of 720 mmHg (95,990 Pa) for 4 minutes. Each of the sandwich structures was put in an oven having a temperature of 120°C for 30 minutes, being kept in the evacuated state. Each of the sandwich structures with the glass sheets and the interlayer preliminarily integrated by compression was put in an autoclave and was subjected to thermal compression treatment under a pressure of 1.3 MPa and at a temperature of 135°C to produce a laminated glass. In Example 1, the interlayer comprised three films laminated and had a final thickness of 1.8 mm. In Example 2, the interlayer comprised a single film (having a thickness of 0.78 mm) .

### EVALUATION

Each laminated glass thus produced was evaluated by the following evaluation test.

### Evaluation Test 1: appearance

If a laminated glass contained no bubbles and was transparent throughout the bonded surfaces between the interlayer and the glass sheets according to visual observation of the appearance of the laminated glass, it was determined that the laminated glass was OK, i.e., acceptable. If a laminated glass contained a residual bubble on a bonded surface, it was determined that the laminated glass was NG, i.e., unacceptable.

### Evaluation Test 2: penetration resistance test

Instead of the laminated glass having dimensions of 100x300 mm employed in Example 1, glass sheets prescribed in JIS R3212 were employed to laminated glasses by the process stated in item production of laminated glass'. The laminated glasses thus produced were evaluated by a penetration resistance test prescribed in JIS R3212. If a laminated glass passed the requirements of JIS R3211, it was determined that the laminated glass was OK, i.e., acceptable. Otherwise, it was determined that the laminated glass was NG, i.e., unacceptable.

### Evaluation Test 3: measurement of maximum sinking amount

A ball test was conducted according to a penetration resistance test prescribed in JIS R3212. A frame, which was supported by four legs having a length of 300 mm or above, was employed because of, e.g., a possibility of a deformed glass hitting against a bottom surface if the frame was formed as prescribed, and difficulty in measuring a deformation amount. The maximum sinking amount was quantified by continuous measurement using a high-speed video camera. The measurement results are shown in Fig. 1. Fig. 1 is a graph showing displacement of a steel ball in the ball test in Example 1 and Example 2, wherein the displacement of the lowest point of a curve corresponds to the maximum sinking amount. The horizontal axis represents time (sec), and the vertical axis represents displacement (mm). In each of the examples, the maximum sinking amount in the ball test, i.e., the shock-absorbing property of the laminated glass is increased in comparison with conventional interlayers.

### Evaluation Test 4: high-speed tensile test

In each of the examples, a specimen of dumbbell No. 7 prescribed in JIS K6251 was employed, and a high-speed tensile test was conducted at 1 m/sec by a high-speed tensile testing machine 'HIDROSHOT' (trademark: product manufactured by SHIMADZU CORPORATION). The test environment was set at 23°C by the constant-temperature bath attached to the testing machine. As evaluation items, a load, which was applied for an extension of 15 mm, and an extension amount, which was obtained when work required for extension caused in this test was 0.3 J, were measured. In Example 1, the average of measured values in the extrusion direction and a direction perpendicular thereto at the time of extrusion was adopted as the measured value since the measured values in both directions were slightly different from each other. Example 1 was measured for the interlayer comprising three films laminated and having a thickness of 1.8 mm. Example 2 was measured for the conventional interlayer having a thickness of 0.78 mm.

### Evaluation Test 5: plate slide test

The laminated glass having dimensions of 100 mm x 300 mm and employed in Example 1 was left in a container, having a side of 300 mm positioned as the base and being supported at an angle of 45 deg from the horizontal for 300 hours, the container being controlled so as to have an environment temperature of 80°C. After that, it was determined that a glass plate slide of 1 mm or below is OK, i.e., acceptable, and that a glass plate slide of longer than 1 mm was NG, i.e., unacceptable. It is seen that although the laminated glass in Example 1 had the maximum sinking amount at a higher level than the conventional interlayers, the laminated glass in Example 1 passed the plate slide test.

The measurement results are shown in Table 1.

**TABLE 1**

| | Example 1 | Example 2 |
|---|---|---|
| Appearance | OK | OK |
| Penetration resistance test | OK | OK |
| Maximum sinking amount (mm) | 128.8 | 65.5 |
| Load for extension of 15 mm (N) | 8.6 | 35.2 |
| Extension amount for work of 0.3 j (mm) | 35.3 | 12.2 |
| Plate slide test | OK | OK |

The present invention is applicable to a laminated glass and an interlayer for a laminated glass for use in a vehicle window, which has high shock-absorbing performance. The laminated glass according to the present invention may be applied to an automobile including an external air bag.

The entire disclosure of Japanese Patent Application No. 2004-129726 filed on April 26, 2004 including specification, claims, drawings and summary is incorporated herein by reference in its entirety.

## Claims

1. A laminated glass for a vehicle window, comprising a plurality of glass sheets and an interlayer interposed between adjacent glass sheets to bond the adjacent glass sheets, wherein the interlayer satisfies the following conditions:
1) when a specimen of dumbbell No. 7 prescribed in JIS K6251 is employed to conduct a high speed tensile test at 23°C and at 1 m/sec, a load for an extension of 15 mm is 10 N or below; and
2) when the interlayer is sandwiched between two glass sheets having a thickness of 2 mm to form a laminated glass having dimensions of 100 mm × 300 mm, and when the laminated glass is left for 300 hrs under an atmosphere of 80°C, having a side of 300 mm positioned as a base and being kept at an angle of 45 deg from a vertical direction, the glass sheets have a slide of 1 mm or below.

2. A laminated glass for a vehicle window, comprising a plurality of glass sheets and an interlayer interposed between adjacent glass sheets to bond the adjacent glass sheets, wherein the interlayer satisfies the following conditions:
1) when a specimen of dumbbell No. 7 prescribed in JIS K6251 is employed to conduct a high speed tensile test at 23°C and at 1 m/sec, an extension amount, which is obtained when work required for extension is 0.3 J, is 30 mm or above; and
2) when the interlayer is sandwiched between two glass sheets having a thickness of 2 mm to form a laminated glass having dimensions of 100 mm × 300 mm, and when the laminated glass is left for 300 hrs under an atmosphere of 80°C, having a side of 300 mm positioned as a base and being kept at an angle of 45 deg from a vertical direction, the glass sheets have a slide of 1 mm or below.

3. The laminated glass according to Claim 1 or 2,
wherein the interlayer comprises at least one material selected in the group consisting of plasticized polyvinyl acetal, a urethane elastomer, a hydrogenated styrene butadiene elastomer, an ethylene acetic vinyl copolymer, a soft plasticized polyvinyl chloride elastomer and an olefin elastomer.

4. An interlayer for a laminated glass, for use in a vehicle window, the interlayer satisfying the following conditions:
1) when a specimen of dumbbell No. 7 prescribed in JIS K6251 is employed to conduct a high speed tensile test at 20°C and at 1 m/sec, a load for an extension of 15 mm is 15 N or below; and
2) when the interlayer is sandwiched between two glass sheets having a thickness of 2 mm to form a laminated glass having dimensions of 100 mm × 300 mm, and when the laminated glass is left for 300 hrs under an atmosphere of 80°C, having a side of 300 mm positioned as a base and being kept at an angle of 45 deg from a vertical direction, the glass sheets have a slide of 1 mm or below.

5. An interlayer for a laminated glass, for use in a vehicle window, the interlayer satisfying the following conditions:
1) when a specimen of dumbbell No. 7 prescribed in JIS K6251 is employed to conduct a high speed tensile test at 23°C and at 1 m/sec, an extension amount, which is obtained when work required for extension is 0.3 J, is 30 mm or above; and
2) when the interlayer is sandwiched between two glass sheets having a thickness of 2 mm to form a laminated glass having dimensions of 100 mm × 300 mm, and when the laminated glass is left for 300 hrs under an atmosphere of 80°C, having a side of 300 mm positioned as a base and being kept at an angle of 45 deg from a vertical direction, the glass sheets have a slide of 1 mm or below.

6. The interlayer according to Claim 4 or 5, wherein the interlayer comprises at least one material selected in the group consisting of plasticized polyvinyl acetal, a urethane elastomer, a hydrogenated styrene butadiene elastomer, an ethylene acetic vinyl copolymer, a soft plasticized polyvinyl chloride elastomer and an olefin elastomer.

7. The laminated glass according to any one of Claims 1 to 3, wherein the interlayer has a multilayered structure.

8. The laminated glass according to any one of Claims 1 to 3, wherein the laminated glass is employed in at least one selected from the group consisting of a front windshield, a side windshield and a rear windshield.

9. The interlayer according to any one of Claims 4 to 6, wherein the interlayer has a multilayered structure.

10. The interlayer according to any one of Claims 4 to 6, wherein the laminated glass is employed in at least one selected from the group consisting of a front windshield, a side windshield and a rear windshield.
